(19) Europäisches Patentamt
European Patent Office
Office européen des brevets

(11) EP 3 169 723 B1

(12) EUROPEAN PATENT SPECIFICATION

(45) Date of publication and mention of the grant of the patent:
**07.02.2024 Bulletin 2024/06**

(21) Application number: **15821727.3**

(22) Date of filing: **16.07.2015**

(51) International Patent Classification (IPC):
***C08J 9/228*** *(2006.01)* ***C08J 9/04*** *(2006.01)*
***B29C 49/04*** *(2006.01)*

(52) Cooperative Patent Classification (CPC):
**C08J 9/146; C08J 9/0023; C08J 9/0061; C08J 9/0071; C08J 9/0095; C08J 9/122; C08J 9/127; C08J 9/144;** C08J 2201/03; C08J 2203/06; C08J 2203/142; C08J 2203/162; C08J 2203/182; C08J 2203/202; C08J 2205/044;

(Cont.)

(86) International application number:
**PCT/US2015/040681**

(87) International publication number:
**WO 2016/011219 (21.01.2016 Gazette 2016/03)**

(54) **NON-VOC PROCESSING AIDS FOR USE IN MANUFACTURING FOAMS USING LOW GLOBAL WARMING POTENTIAL BLOWING AGENTS**

VOC-FREIE VERARBEITUNGSHILFSMITTEL ZUR VERWENDUNG BEI DER HERSTELLUNG VON SCHAUMSTOFFEN MITHILFE VON TREIBMITTELN MIT NIEDRIGEM POTENZIELLEM BEITRAG ZUR GLOBALEN ERWÄRMUNG

AUXILIAIRES DE TRAITEMENT SANS COV POUR UNE UTILISATION DANS LA FABRICATION DE MOUSSES UTILISANT DES AGENTS GONFLANTS À FAIBLE POTENTIEL D'EFFET DE SERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2014 US 201462025128 P**

(43) Date of publication of application:
**24.05.2017 Bulletin 2017/21**

(73) Proprietor: **Owens Corning Intellectual Capital, LLC**
**Toledo, OH 43659 (US)**

(72) Inventors:
- **DELAVIZ, Yadollah**
  **Lewis Center, OH 43035 (US)**
- **BOUDREAUX, Chase J.**
  **Canton, OH 44708 (US)**
- **HAN, Xiangmin**
  **Stow, OH 44224 (US)**
- **BRAMMER, S. Thomas**
  **Kent, OH 44240 (US)**
- **FABIAN, Barbara Ann**
  **Medina, OH 44256 (US)**
- **WEEKLEY, Mitchell Zane**
  **Tallmadge, OH 44278 (US)**

(74) Representative: **Cabinet Beau de Loménie**
**158, rue de l'Université**
**75340 Paris Cedex 07 (FR)**

(56) References cited:
**WO-A1-2014/015315**
**WO-A1-2014/152410**
**US-A- 5 276 092**
**US-A1- 2007 173 554**
**US-A1- 2007 299 152**
**US-A1- 2010 056 657**
**US-A1- 2011 039 964**
**US-A1- 2011 144 221**
**US-A1- 2011 144 221**
**US-A1- 2011 288 192**
**US-A1- 2012 043 492**
**US-A1- 2012 225 961**
**US-B2- 8 119 701**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08J 2205/052; C08J 2205/10; C08J 2325/06;
C08J 2425/14; C08J 2471/02

## Description

## BACKGROUND

This invention relates to foamable polystyrene mixtures and to extruded polystyrene (XPS) foams formed from such mixtures.

The general procedure utilized in the preparation of extruded synthetic foam generally includes the steps of melting a base polymeric composition, incorporating one or more blowing agents and other additives into the polymeric melt under conditions that provide for the thorough mixing of the blowing agent and the polymer while preventing the mixture from foaming prematurely, e.g., under pressure. This mixture is then typically extruded through a single or multistage extrusion die to cool and reduce the pressure on the mixture, allowing the mixture to foam and produce a foamed product. As will be appreciated, the relative quantities of the polymer(s), blowing agent(s) and additives, the temperature and the manner in which the pressure is reduced will tend to affect the qualities and properties of the resulting foam product. As will also be appreciated, the foamable mixture is maintained under a relatively high pressure until it passes through an extrusion die and is allowed to expand in a region of reduced pressure. Although reduced relative to the pressure at the extrusion die, the reduced pressure region may actually be maintained at a pressure above atmospheric pressure, for example up to about 2 atm or even more in some applications, may be maintained at a pressure below atmospheric pressure, for example down to about 0.25 atm or even less in some applications. Further, unless indicated otherwise, all references to pressure provided herein are stated as the absolute pressure.

The solubility of conventional blowing agents, such as chlorofluorocarbons ("CFCs") and certain alkanes, in polystyrene tends to reduce the extrusion melt viscosity and improve cooling of expanded polystyrene melts. For example, the combination of pentane and a CFCs such as Freon 11 and 12 is partially soluble in polystyrene and has been used for generating polystyrene foams that exhibited a generally acceptable appearance and physical properties such as surface finish, cell size and distribution, orientation, shrinkage, insulation property (R- value), and stiffness.

However, in response to the apparent contribution of such CFC compounds to the reduction of the ozone layer in Earth's stratosphere, the widespread use and accompanying atmospheric release of such compounds in applications such as aerosol propellants, refrigerants, foam-blowing agents and specialty solvents has recently been drastically reduced or eliminated by government regulation.

The divergence away from the use of CFCs has led to utilization of alternative blowing agents, such as hydrogen-containing chlorofluoroalkanes (HCFCs). However, while HCFC's are considered to be environmentally friendly blowing agents compared to CFCs, such compounds do still contain some chlorine and are therefore said to have an ozone depletion potential.

Another alternative class of blowing agents, hydrofluorocarbons (HFC's), are now being commonly used as more ozone friendly options. Particularly, $CF_3CH_2CF_2H$ (HFC-245fa), 1,1,1,2-tetrafluoroethane (HFC-134a), 1,1,2,2-tetrafluoroethane (HFC-134) and 1,1-difluoroethane (HFC-152a), offer desirable improvements, such as zero ozone depletion and lower (but still significant) global warming potential. This class is used as an aid for improved insulation, due at least in part to the low thermal conductivity of the vapor. However, these compounds are expensive, tend to be less soluble in polystyrene, and have significant global warming potential. For example, HFC-134a has a global warming potential ('GWP') of 1430. Therefore, the use of HFCs as blowing agents, although improved over traditional blowing agents, still does not provide a blowing agent that is free of global warming implications.

Hydrocarbons such as pentane, hexane, cyclopentane and other homologs of this series have also been considered. Carbon dioxide is an attractive candidate as a blowing agent, from both the environmental and economic standpoints. The challenges associated with successfully using carbon dioxide as a blowing agent are, however, significant in light of the relatively low solubility, high diffusivity and poor processability of carbon dioxide in polystyrene resins.

A new generation of fluroralkene blowing agents have been developed with zero ODP (ozone depletion potential) and low (negligible) GWP (global warming potential) known as hydrofluoroolefins (HFOs) and hydrochlorofluoroolefins (HCFOs). HFOs have been identified as potential low global warming potential blowing agents for the production of thermoplastic foams, such as polystyrene foam, for thermal insulation.

US 2007/173554 discloses a method of manufacturing expanded polymeric foam, comprising:

(i) preparing a polymeric melt from a major amount of a polymer composition having a melt flow index of at least 10 and a minor amount of at least one adipate of formula I

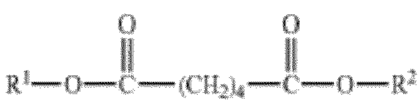

(I);

(ii) injecting $CO_2$ into the polymeric melt to form a foamable mixture; and
(iii) ejecting the foamble mixture through a die into a region of reduced pressure.

US 2007/144221 A1 discloses a foamable composition comprising polystyrene, 0.5-1 wt.-% of glycerol stearate in ethylene vinyl acetate as a non-VOC processing aid. The blowing agent is non-ozone depleting, such as hydrofluorocarbon, $CO_2$, argon, water, air, nitrogen and helium.

**BRIEF SUMMARY**

The present invention is directed to a foamable polymeric mixture a polymer composition comprising polystyrene;

a blowing agent composition comprising carbon dioxide, HFO-1234ze, and HFC-152a;
from 0.05 to 10 wt.%, based upon the total weight of the foamable polystyrene mixture, of at least one non-VOC processing aid comprising one or more of fatty acids, ethylene oxide/propylene oxide block copolymer, styrene-methyl methacrylate copolymer, and a dispersion of organic salt of a fatty acid in ethylene vinyl acetate copolymer; and from 0.005 to 5 wt.% of an infrared attenuating agent, based upon the total weight of the foamable polystyrene mixture.

The present invention also relates to an extruded polymeric foam. The extruded polymeric foam is formed from a foamable polymer material that includes a polymeric composition comprising polystyrene, a blowing agent composition comprising carbon dioxide, HFO-1234ze, and HFC-152a, from 0.05 to 10 wt.% of at least one non-VOC processing aid, and from 0.005 to 5 wt.% of an infrared attenuating agent, based upon the total weight of the foamable polystyrene material. The non-VOC processing aid comprises one or more of fatty acids, ethylene oxide/propylene oxide block copolymer; styrene-methyl methacrylate copolymer; and a dispersion of organic salt of a fatty acid in ethylene vinyl acetate copolymer.

The foregoing and other objects, features, and advantages of the present disclosure will become more readily apparent from a consideration of the detailed description that follows.

**DESCRIPTION OF THE DRAWINGS**

Example embodiments of the invention will be apparent from the more particular description of certain example embodiments of the invention provided below and as illustrated in the accompanying drawings.

FIG. 1 is a schematic drawing of an exemplary extrusion apparatus useful for practicing methods according to the invention.
FIG. 2 is a graphical depiction of the effects of increasing concentrations of styrene-methyl methacrylate copolymer processing aids on foam density and k value after 60 days.
FIG. 3 is a graphical depiction of the effects of increasing concentrations of octyl benzoate processing aid on foam density and k value after 60 days.
FIG. 4 is a graphical depiction of the effects of increasing concentrations of fatty acid ester processing aid on foam density and k value after 60 days.

**DETAILED DESCRIPTION**

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are described herein.

In the drawings, the thickness of the lines, layers, and regions may be exaggerated for clarity. It is to be noted that like numbers found throughout the figures denote like elements. The terms "composition" and "inventive composition" may be used interchangeably herein.

As used herein, the term "blowing agent" is understood to include physical (e.g., dissolved gaseous agents) or chemical blowing agents (e.g., a gas generated by decomposition). A blowing agent is generally added to a molten polymer, e.g., in an extruder, and under the proper conditions, to initiate foaming to produce a foamed thermoplastic. The blowing agent expands the resin and forms cells (e.g., open or closed pores). As the resin hardens or cures, foam is produced with either the blowing agent trapped in the cells or ambient air displaces the blowing agent in the cells. The blowing agents discussed herein are preferred to be environmentally acceptable blowing agents (e.g., they are generally safe for the environment) as would be recognized by one of ordinary skill in the art.

As used herein, unless specified otherwise, the values of the constituents or components of the blowing agent

or other compositions are expressed in weight percent or % by weight of each ingredient in the composition. The values provided include up to and including the endpoints given.

As it pertains to the present disclosure, "closed cell" refers to a polymeric foam having cells, at least 95% of which are closed. However, in the present application, cells may be "open cells" or closed cells (*i.e.,* certain embodiments disclosed herein may exhibit an "open cell" polymeric foam structure).

The present invention relates to a polymeric foam and polymeric foam products, such as extruded or expanded polystyrene foams, formed from a composition that contains a foamable polystyrene material, a blowing agent composition comprising carbon dioxide, HFO-1234ze, and HFC-152a , a non-VOC processing aid, and an infrared attenuating agent.

FIG. 1 illustrates a traditional extrusion apparatus 100 useful for practicing methods according to the present invention. The extrusion apparatus 100 may comprise a single or double (not shown) screw extruder including a barrel 102 surrounding a screw 104 on which a spiral flight 106 is provided, configured to compress, and thereby, heat material introduced into the screw extruder. As illustrated in FIG. 1, the polymeric composition may be conveyed into the screw extruder as a flowable solid, such as beads, granules or pellets, or as a liquid or semi-liquid melt, from one or more (not shown) feed hoppers 108.

As the basic polymeric composition advances through the screw extruder, the decreasing spacing of the flight 106, define a successively smaller space through which the polymer composition is forced by the rotation of the screw. This decreasing volume acts to increase the temperature of the polymer composition to obtain a polymeric melt (if solid starting material was used) and/or to increase the temperature of the polymeric melt.

As the polymer composition advances through the screw extruder 100, one or more ports may be provided through the barrel 102 with associated apparatus 110 configured for injecting one or more processing aids into the polymer composition. Similarly, one or more ports may be provided through the barrel 102 with associated apparatus 112 for injecting one or more blowing agents into the polymer composition. In some exemplary embodiments, the polymer processing aids and blowing agents are introduced through a single apparatus. Once the polymer processing aid(s) and blowing agent(s) have been introduced into the polymer composition, the resulting mixture is subjected to some additional blending sufficient to distribute each of the additives generally uniformly throughout the polymer composition to obtain an extrusion composition.

This extrusion composition is then forced through an extrusion die 114 and exits the die into a region of reduced pressure (which may be below atmospheric pressure), thereby allowing the blowing agent to expand and produce a polymeric foam material. This pressure reduction may be obtained gradually as the extruded polymeric mixture advances through successively larger openings provided in the die or through some suitable apparatus (not shown) provided downstream of the extrusion die for controlling to some degree the manner in which the pressure applied to the polymeric mixture is reduced. The polymeric foam may also be subjected to additional processing such as calendaring, water immersion, cooling sprays or other operations to control the thickness and other properties of the resulting polymeric foam product.

The foamable polymer composition is the backbone of the formulation and provides strength, flexibility, toughness, and durability to the final product. The particular polymer composition is selected to provide sufficient mechanical strength and/or to the process utilized to form final foamed polymer products. In addition, the foamable polymer composition is preferably chemically stable, that is, generally non-reactive, within the expected temperature range during formation and subsequent use in a polymeric foam. The foamable polymer composition comprises polystyrene.

In certain exemplary embodiments, minor amounts of monoethylenically unsaturated monomers such as $C_2$ to $C_6$ alkyl acids and esters, ionomeric derivatives, and $C_2$ to $C_6$ dienes may be copolymerized with styrene to form the polystyrene.

Non-limiting examples of copolymerizable monomers include acrylic acid, methacrylic acid, ethacrylic acid, maleic acid, itaconic acid, acrylonitrile, maleic anhydride, methyl acrylate, ethyl acrylate, isobutyl acrylate, n-butyl acrylate, methyl methacrylate, vinyl acetate and butadiene.

In certain exemplary embodiments, the foamable polymer melts may be formed substantially of (*e.g.*, greater than 95 percent), and in certain exemplary embodiments, formed entirely of polystyrene. The foamable polymer composition may be present in the polymeric foam in an amount from about 60% to about 96% by weight, in an amount from about 60% to about 75% by weight, in an amount from about 70% to about 96% by weight, or in an amount from about 85% to about 96% by weight. In certain exemplary embodiments, the foamable polymer composition may be present in an amount from about 90% to about 96% by weight. As used herein, the terms "% by weight" and "wt%" are used interchangeably and are meant to indicate a percentage based on 100% of the total weight of the dry components.

lThe blowing agent composition comprises $CO_2$, HFO-1234ze, and at least one hydrofluorocarbon (HFC) comprising HFC-152a.

The blowing agent composition comprises 1,1-difluoroethane (HFC-152a). Further examples of blowing HFC blowing agents include 1,1,1,2-tetrafluoroethane (HFC-134a), 1,1,2,2-tetrafluoroethane (HFC-134), 1,1,1-trifluoroethane (HFC-143a), difluoromethane (HFC-32), 1,3,3,3-pentafluoropropane pentafluoro-ethane (HFC-125), fluoroethane (HFC-161), 1,1,2,2,3,3-hexafluoropropane (HFC 236ca), 1,1,1,2,3,3-hexafluoropropane (HFC-236ea), 1,1,1,3,3,3-hexafluoropropane (HFC-236fa), 1,1,1,2,2,3-hexafluoropropane (HFC-245ca), 1,1,2,3,3-pentafluoropropane (HFC-245ea), 1,1,1,2,3 pentafluoropropane (HFC-245eb), 1,1,1,3,3-pentafluoropropane (HFC-245fa), 1,1,1,4,4,4-hexafluorobutane (HFC-356mff), 1,1,1,3,3-pentafluorobutane (HFC-365mfc), and combinations thereof.

The blowing agent composition includes a portion of $CO_2$, such as between 1.0 and 5.5% by weight (based upon the total weight of the foamable polymeric mixture). In some exemplary embodiments, the blowing agent composition includes $CO_2$ in 1.0 to 5.0 % by weight or in 1.25 to to 2.75 % by weight (based upon the total weight of the foamable polymeric mixture). The blowing agent composition further includes HFO-1234ze. The blowing agent composition further includes one or more HFC comprising HFC-152a.

In some exemplary embodiments, the blowing agent composition includes $CO_2$ and a blend of HFO-1234ze and HFC-152a in a ratio of from 99/1 to 1/99. In other exemplary embodiments, the blowing agent composition includes 3.0 to 9.0% by weight HFO-1234ze and 0.25 to 1.0 % by weight $CO_2$, (based upon the total weight of the foamable polymeric mixture).

The blowing agent composition as a whole is present in an amount from 2% to 12% by weight, and in exemplary embodiments, from 3% to 10% by weight, or from 5% to 8% by weight (based upon the total weight of the foamable polystyrene mixture).

The blowing agent may be introduced in liquid or gaseous form (e.g., a physical blowing agent) or may be generated in situ while producing the foam (e.g., a chemical blowing agent). For instance, the blowing agent may be formed by decomposition of another constituent during production of the foamed thermoplastic. For example, the addition of a carbonate composition or polycarbonic acid to the foamable resin will generate carbon dioxide upon heating during the extrusion process. In some exemplary embodiments, $CO_2$ is included as a major component of the blowing agent composition.

In addition to the blowing agents, one or more non-VOC processing aids are added to the polymer melt to expand the processing windows in XPS extrusion. Expanding the processing windows for XPS extrusion impacts foaming process parameters, such as throughput rate, die pressure, die temperature, etc., which may have a substantial effect on the properties of the resulting foam. This may occur through mechanisms such as plasticization as well as enhancing blowing agent solubility in polystyrene melt.

The non-VOC processing aid(s) comprise one or more of fatty acids, ethylene oxide/propylene oxide block copolymer, styrene-methyl methacrylate copolymer, and a masterbatch of a dispersion of organic salt of a fatty acid in ethylene vinyl acetate copolymer. In some exemplary embodiments, the ethylene oxide/propylene oxide block copolymer is 2,6-bis (1,1-dimethyl)-4-methyl-methyl-oxirane polymer with oxirane. In some exemplary embodiments, the non-VOC and non-flammable process aids are free of ether, acetone, alcohols, hydrocarbon and other similar VOC compounds.

The styrene/methyl methacrylate (S/MMA) copolymer processing aid may be used at 80/20 mole ratios. The high level (20%) of methyl methacrylate moieties with ester (-COO--) groups adds polarity to the polystyrene melt and enhances $CO_2$ and HFO solubility. The non-VOC processing aid(s) improve the stability of the extrusion pressure/temperature profile and thereby improve the uniformity in the production of different thicknesses of polystyrene foam board.

The non-VOC processing aid is included in an amount from 0.05 to 10.0% by weight based on the weight of polystyrene foamable material. In other exemplary embodiments, the non-VOC processing aid is included in an amount from 1.0 to 3.0% by weight based on the weight of polystyrene foamable material. In some exemplary embodiments, a minor portion, typically less than 5.0% by weight, or less than 3.0 % by weight or, perhaps, even less than 2.0% by weight of the non-VOC processing aid, , may be used in combination with a similar or greater concentration of the blowing agent(s).

The non-VOC processing aids may be pumped directly into an extruder in the liquid form, or alternatively, the non-VOC processing aids may be microencapsulated into powders and fed directly into a hopper. The material used to microencapsulate the processing aid may comprise one or more polymers, such as, for example, melamine formaldehyde, urea formaldehyde, and acrylate copolymer resins. According to various aspects of the present invention, microencapsulation of the processing aids may reduce the diffusivity of blowing agents by trapping the blowing agent gases inside the microencapsulation shells. Such an encapsulation provides controlled release, wherein the shell may let $CO_2$ diffuse in, but will keep the processing aid from diffusing out of the shell. It is further contemplated that the processing aids be compounded into a carrier material and incorporated into masterbatch pellets for direct delivery into the extruder. In some exemplary embodiments, the masterbatch is a 20% dispersion of glycerol mono-stearate of fatty acid in ethylene vinyl acetate copolymer.

The non-VOC processing aids disclosed herein may be included in a foamable polymer melt to improve the foam processing parameters, such as by widening the processability window for the foamable material. For instance, in some exemplary embodiments, the processing aid is a low molecular weight processing aid, which is significantly smaller in terms of size and molecular weight compared to the polystyrene, which may have a molecular weight of 200,000 or more. Therefore, the processing aids can penetrate between large polymer molecules and push them apart to create more free volume, which called plasticization. Plasticization of the polystyrene melt during extrusion helps to gain a desired viscosity, pressure, lower density, and/or cell growth rate.

The processing aids may further improve the compatibility between HFOs and other blowing agents, such as $CO_2$, in the polystyrene matrix. The polar ester groups have a high affinity (hydrophilic attraction) with HFCs, HFOs and $CO_2$ blowing agents, which works to create a single, homogeneous mixture of the blowing agent and polystyrene melt. Improved compatibility between the blowing agent and the polymer melt reduces the die pressure needed to form a homogeneous blowing agent/melt solution before cell nucleation to prevent pre-foaming. By lowering the die pressure with the inclusion of the non-VOC processing aids increases both the processing window for making thicker or wider foam boards and the foaming temperature.

The foamable composition further contains at least one infrared attenuating agent (IAA) to increase the R-value of the foam product. Blowing agents such as HFCs and HFOs, while environmentally friendly, tend to decrease the R-value of the foam product compared to a conventional HCFC foamed product. The addition of low levels of an infrared attenuating agent to a foamable composition containing such blowing agents may increase the R-value of the foam to an amount at least comparable to, or better than, foam produced with an HCFC blowing agent. Although the infrared attenuating agent increases the R-value for foams that include HFO and/or HFC blowing agents, the addition of infrared attenuating agents also tends to decrease the cell size of the cells in the foam, acts as nucleating agent as well which results in undesirable final foamed products including higher density and product cost. Therefore, the IAA is included in an amount from 0.005% to 5.0% by weight based on the weight of polystyrene foamable material. In other embodiments, the infrared attenuating agent may be present in an amount from 0.05 to 3.0% by weight, from 0.05 to 2.0% by weight, or from 0.1 to 1.0% by weight. In some exemplary embodiments, the infrared attenuating agent is present in the composition in an amount less than or equal to 0.5% by weight.

Non-limiting examples of suitable IAAs for use in the present composition include nanographite, carbon black, powdered amorphous carbon, asphalt, granulated asphalt, milled glass, fiber glass strands, mica, black iron oxide, metal flakes or powder (for example, aluminum flakes or powder), carbon nanotube, nanographene platelets, carbon nanofiber, activated carbon, titanium dioxide, and combinations thereof.

In at least one exemplary embodiment, the IAA is nanographite. The nanographite can be multilayered by furnace high temperature expansion from acid-treated natural graphite or microwave heating expansion from moisture saturated natural graphite. In addition, the nanographite may be multi-layered nanographite which has at least one dimension less than 100 nm. In some exemplary embodiments, the nanographite has at least two dimensions less than 100 nm.

The nanographite may or may not be chemically or surface modified and may be compounded in a polymer, which is used both as a medium and a carrier for the nanographite. Possible carriers for the nanographite include polymer carriers such as, but not limited to, polymethyl methacrylate (PMMA), polystyrene, styrene-acrylonitrile (SAN) copolymer, polyvinyl alcohol (PVOH), and polyvinyl acetate (PVA). In exemplary embodiments, the nanographite is substantially evenly distributed throughout the foam. As used herein, the phrase "substantially evenly distributed" is meant to indicate that the substance (for example, nanographite) is evenly distributed or nearly evenly distributed within the foam.

The foam composition may further contain a fire retarding agent in an amount up to 5.0% or more by weight. For example, fire retardant chemicals may be added in the extruded foam manufacturing process to impart fire retardant characteristics to the extruded foam products. Non-limiting examples of suitable fire retardant chemicals for use in the inventive composition include brominated aliphatic compounds such as hexabromocyclododecane (HBCD) and pentabromocyclohexane, brominated phenyl ethers, esters of tetrabromophthalic acid, halogenated polymeric flame retardant such as brominated polymeric flame retardant, phosphoric compounds, and combinations thereof.

Optional additives such as nucleating agents, plasticizing agents, pigments, elastomers, extrusion aids, antioxidants, fillers, antistatic agents, biocides, termite-ocide; colorants; oils; waxes; flame retardant synergists; and/or UV absorbers may be incorporated into the inventive composition. These optional additives may be included in amounts necessary to obtain desired characteristics of the foamable gel or resultant extruded foam products. The additives may be added to the polymer mixture or they may be incorporated in the polymer mixture before, during, or after the polymerization process used to make the polymer.

Once the polymer processing aid(s), blowing agent(s), and optional additional additives have been introduced into the polymeric material, the resulting mixture is subjected to some additional blending sufficient to distribute each of the additives generally uniformly throughout the polymer composition to obtain an extrusion composition.

In some exemplary embodiments, the foam composition produces rigid, substantially closed cell, polymer foam boards prepared by an extruding process. Extruded foams have a cellular structure with cells defined by cell membranes and struts. Struts are formed at the intersection of the cell membranes, with the cell membranes covering interconnecting cellular windows between the struts. In the present invention, the inventive composition produces substantially closed cellular foams with an average density of less than 64.0 $kg/m^3$ or less than 30 $kg/m^3$. In some exemplary embodiments, the extruded polystyrene foam has a density of less than 25.6 $kg/m^3$. In some exemplary embodiments, the foams have an average density of less than 160.2 $kg/m^3$ (10 pcf, pound per cubic foot), or less than 80.1 $kg/m^3$ (5 pcf) or less than 48.1 $kg/m^3$ (3 pcf). In some exemplary embodiments, the extruded polystyrene foam has a density of less than 25.6 $kg/m^3$ (1.6 pcf). The extruded polystyrene foam produced using the processing aids disclosed herein have good thermal

insulation properties.

It is to be appreciated that the phrase "substantially closed cell" is meant to indicate that the foam contains all closed cells or nearly all of the cells in the cellular structure are closed. In most exemplary embodiments, not more than 30.0% of the cells are open cells, and particularly, not more than 10.0%, or more than 5.0% are open cells, or otherwise "non-closed" cells. The closed cell structure helps to increase the R-value of a formed, foamed insulation product. It is to be appreciated, however, that it is within the purview of the present invention to produce an open cell structure, although such an open cell structure is not an exemplary embodiment.

Additionally, the inventive foam composition produces extruded foams that have insulation values (R-values) of about 4.0-7.0 per inch (1 inch = 2.54 cm). In at least one embodiment, the R-value is about 5.0 per inch. In addition, the average cell size of the inventive foam and foamed products may be from about 0.005 mm (5 microns) to 0.6 mm (600 microns) and, in some exemplary embodiments, from 0.05 mm (50 microns) to 0.400 mm (400 microns). The extruded inventive foam may be formed into an insulation product such as a rigid insulation board, insulation foam, packaging product, and building insulation or underground insulation (for example, highway, airport runway, railway, and underground utility insulation).

The inventive foamable composition additionally may produce extruded foams that have a high compressive strength, which defines the capacity of a foam material to withstand axially directed pushing forces. In at least one exemplary embodiment, the inventive foam compositions have a compressive strength within the desired range for extruded foams, which is between 41.4 and 827.4 kPa (6 and 120 psi). In some exemplary embodiments, the inventive foamable composition produces foam having a compressive strength between 68.9 and 758.5 kPa (10 and 110 psi).

In accordance with another exemplary aspect, the extruded inventive foams possess a high level of dimensional stability. For example, the change in dimension in any direction is 5% or less. In addition, the foam formed by the inventive composition is desirably monomodal and the cells have a relatively uniform average cell size. As used herein, the average cell size is an average of the cell sizes as determined in the X, Y and Z directions. In particular, the "X" direction is the direction of extrusion, the "Y" direction is the cross machine direction, and the "Z" direction is the thickness. In the present invention, the highest impact in cell enlargement is in the X and Y directions, which is desirable from an orientation and R-value perspective. In addition, further process modifications would permit increasing the Z-orientation to improve mechanical properties while still achieving an acceptable thermal property. The extruded inventive foam can be used to make insulation products such as rigid insulation boards, insulation foam, and packaging products.

The inventive concepts have been described above both generically and with regard to various exemplary embodiments. Although the general inventive concepts have been set forth in what is believed to be exemplary illustrative embodiments, a wide variety of alternatives known to those of skill in the art can be selected within the generic disclosure. Additionally, following examples are meant to better illustrate the present invention, but do in no way limit the general inventive concepts of the present invention.

In these examples, the following non-SI units are used:

$$1 \text{ psi} = 6895 \text{ Pa}$$

$$1 \text{ pcf} = 16 \text{ kg/m}^3$$

$$1 \text{ bar} = 10^5 \text{ Pa}$$

$$1 \text{ Btu.in/°F.hr.ft}^2 = 0.144 \text{ W/m.°C}$$

<u>**Example 1**</u> (blowing agent composition not within the scope of the claims)

XPS foam was prepared using a twin screw extruder. Polystyrene was melted in the extruder and then mixed with an injected HFO blowing agent to form a homogeneous solution. The HFO blowing agent was included in various amounts, both with and without the addition of a processing aid. The solution was then cooled to the right foaming conditions, including a die temperature between 110 and 130 °C and foaming die pressure between 800 and 1100 psi. Table 1, below, lists the properties of the resulting polystyrene foam. As shown in Table 1, XPS foam produced using an HFO blowing agent without a processing aid demonstrated very small cell sizes (<0.1 mm) and high foam densities (>3.5 pcf). However, the inclusion of an adipate ester processing aid produced a foam with an acceptable density (3.0 pcf) and an average cell size of around 0.2 mm.

Table 1. XPS foam from HFOs + CO2 with and without processing aids

| | HFO-1234ze (%) | HFO-1233zd (%) | $CO_2$ (%) | Dena 681/Pluronic F108 (%) | Cell size (mm) | Density (pcf) | k value* at 60 days | Die Pressure (bar/psi) | Die Temp. (°C) | Shaping Plate Temp. (°C) |
|---|---|---|---|---|---|---|---|---|---|---|
| 1 | 10 | 0 | 0 | 0 | 0.08 | 3.8 | 0.179 | 94/1363 | 124 | 100 |
| 2 | 12 | 0 | 0 | 0 | 0.07 | 4.35 | 0.175 | 83/1204 | 119 | 100 |
| 3 | 14 | 0 | 0 | 0 | 0.07 | 4.10 | 0.176 | 83/1204 | 119 | 100 |
| 4 | 5.04 | 0.27 | 1.25 | 2/1 | 0.18 | 3.00 | 0.187 | 76/1102 | 124 | 120 |
| *k value is defined as thermal conductivity in the unit of Btu.in/°F.hr.$ft^2$ | | | | | | | | | | |

Additionally, Table 1 illustrates that the inclusion of the processing aid allows the foamable polymer composition to be processed at lower die pressure than is the case if the processing aids are not included. Lowering the die pressure increases the processing window for making thicker and/or wider foam boards and can also facilitate the cell orientation control and the shaping process during foam board expansion and shaping. Further, Sample 4, including the processing aid, demonstrated the capability to use a higher shaping plate temperature which helped to produce lower foam density.

**Example 2** (blowing agent composition not within the scope of the claims)

Foam samples were prepared as described in Example 1, incorporating a blowing agent comprising a combination of 5.04 weight percent HFO-1234ze, 0.27 weight percent HFO-1233zd, and 1.25 weight percent $CO_2$ (based upon the total weight of the foamable polymeric mixture). Different processing aids were evaluated at similar extrusion processing conditions. The resulting foam properties are illustrated below in Table 2.

Table 2. Examples of XPS foams with different processing aids

| Sample | Processing aids | % of processing aids | Cell size (mm) | Density (pcf) | k value at 60 days |
|---|---|---|---|---|---|
| X5 | styrene-methyl methacrylate copolymer | 10 | 0.18 | 2.10 | 0.187 |
| L8 | Dena 109 (adipate ester) 10% masterbatch | 10 (1% active) | 0.19 | 2.00 | 0.191 |
| s6 | Dena 109 (adipate ester) 10% masterbatch | 30 (3% active) | 0.20 | 1.93 | 0.194 |
| b2 | Dena 109 (adipate ester) liquid | 1.5 | 0.19 | 2.00 | 0.196 |
| b8 | Dena 109 (adipate ester) liquid/Pluronic F108 powder | 1.5/0.75 | 0.19 | 1.92 | 0.199 |
| E6 | Dena 681(octyl benzoate)/Pluronic F108 powder | 2/0.75 | 0.19 | 1.87 | 0.197 |
| D4 | Dena 681 (octyl benzoate) | 2 | 0.19 | 1.86 | 0.195 |
| G6 | Propylene Carbonate | 2 | 0.18 | 1.76 | 0.196 |
| j5 | PT-24 microencapsulated powder 20% masterbatch | 15.65 (2.5% active) | 0.13 | 1.73 | 0.201 |
| K7 | PCM PT33 microencapsulated powder | 2.5 | 0.11 | 1.96 | 0.198 |
| L8 | PCM PT-5 liquid | 3 | 0.19 | 1.80 | 0.198 |
| M8 | PCM PT60 10% masterbatch | 30 (3% active) | 0.21 | 1.82 | 0.192 |
| t6 | Pluronic L64 liquid | 3 | 0.16 | 1.97 | 0.195 |

(continued)

| Sample | Processing aids | % of processing aids | Cell size (mm) | Density (pcf) | k value at 60 days |
|---|---|---|---|---|---|
| U5 | Pationic 901K | 2.5 | 0.21 | 1.95 | 0.191 |

**Example 3** (blowing agent composition not within the scope of the claims)

Foam samples were prepared as described in Example 1, incorporating a blowing agent comprising a combination of 5.04% by weight HFO-1234ze, 0.27% by weight HFO-1233zd, and 1.25% by weight $CO_2$ (based upon the total weight of the foamable polymeric mixture). The foams were produced with similar densities of about 1.85 to 1.90 pcf. Each of the samples also incldued a different processing aid.

Comparative Examples 1-3 were prepared using HFO only without any processing aid. Table 2, below, illustrates the cell morphologies, such as cell size, cell orientation, cell wall thickness, and cell strut size for each of the resulting XPS foams.

Table 3. Cell morphology and foam properties with densities between 1.85 and 1.90 pcf.

| Sample | Processing aids | Cell size (mm) | Cell Orient. (X/Z) | Cell wall thickness (μm)) | Cell strut size (μm)) | kvalue at 120 days | Compressive strength (psi) | Density (pcf) |
|---|---|---|---|---|---|---|---|---|
| Comp. 1 | None | 0.08 | 1.0 | 1.0 | 3.0 | 0.182 | 123.9 | ~4.0 |
| Comp. 2 | none | 0.07 | 1.0 | 0.8 | 1.9 | 0.178 | 115.9 | ~4.0 |
| Comp. 3 | none | 0.07 | 0.75 | 0.7 | 2.0 | 0.179 | 105.1 | ~4.0 |
| E7 | 2% Dena 681/1% Pluronic F108 | 0.18 | 1.06 | 3.1 | 8.2 | 0.190 | 55.1 | ~1.9 |
| D4 | 2% Dena 681 (octyl benzoate) | 0.19 | 0.97 | 1.2 | 3.6 | 0.197 | 28.6 | ~1.9 |
| D5 | 2.5% Dena 681 (octyl benzoate) | 0.19 | 0.98 | 1.9 | 5.0 | 0.197 | 27.1 | ~1.9 |
| D6 | (octyl benzoate) | 0.19 | 0.93 | 1.0 | 4.3 | 0.199 | 25.2 | ~1.9 |
| E2 | 2% Dena 681 (octyl benzoate) 0.25% Pluronic F108 (difunction al block copolymer) | 0.19 | 1.06 | 1.3 | 3.9 | 0.199 | 30.3 | ~1.9 |
| E4 | 2% Dena 681(octyl benzoate) / 0.5% Pluronic F108 | 0.19 | 1.06 | 1.1 | 4.2 | 0.199 | 28.6 | ~1.9 |
| E6 | 2% Dena 681/0.5% Pluronic F108 | 0.19 | 1.00 | 1.2 | 5.2 | 0.199 | 28.6 | ~1.9 |
| G4 | 1% propylene carbonate | 0.17 | 0.95 | 0.9 | 3.4 | 0.195 | 32.3 | ~1.9 |
| J3 | 2% PT24 | 0.13 | 0.92 | 0.8 | 2.4 | 0.200 | 34.8 | ~1.9 |
| L5 | 1.5%PT(-5) | 0.17 | 1.00 | 0.9 | 4.0 | 0.196 | 35.2 | ~1.9 |
| L6 | 2%PT(-5) | 0.18 | 0.94 | 1.2 | 3.3 | 0.197 | 32.1 | ~1.9 |
| M6 | 2%PT60 | 0.19 | 1.00 | 1.5 | 5.5 | 0.195 | 32.3 | ~1.9 |
| M7 | 2.5%PT60 | 0.19 | 1.11 | 1.3 | 3.9 | 0.195 | 31.5 | ~1.9 |

As illustrated above in Table 3, inclusion of the processing aids in the manufacture of foam increases the avereage cell size to between about 0.13 to about 0.19 mm as compared to compositions that do not include the processing aids. Additionally, the inclusion of the processing aids enlarge the cell wall thickenss, cell strut thickness, and reduce density of the foam. Reducing the density of the foam lowers the overall cost of producing the foam and improves the foaming process.

**Example 4** (blowing agent composition not within the scope of the claims)

XPS foam samples were prepared using a blowing agent combination of 5.04% by weight HFO-1234ze, 0.27% by weight HFO-1233zd, and 1.25% by weight $CO_2$ (based upon the total weight of the foamable polymeric mixture). Each of the samples also included one of three processing aids in varying amounts: 1) styrene-methyl methacrylate copolymer (80/20 ratio), 2) octyl benzoate, and 3) fatty acid esters. Figures 3-6 illustreate the influence of the processing aids on both density and k value at different concentrations.

Figure 2 illustrates the effect that increasing concentrations (0 to 60% by weight) of styrene-methyl methacrylate copolymer processing aids has on the density and k-value of XPS foam after 60 days. The k-value measures the thermal conductivity of the foam, which is a measure of the ability of the foam to conduct heat. The lowest density (about 2.03 pcf) was achieved at 40% processing aid with very good k values (less than 0.1876) achieved at all concentrations (beginning with concentrations of at least 0.8%).

Figure 3 illustrates the effect that increasing concentrations (0 to 4.0% by weight) of octyl benzoate processing aid has on the density and k-value of XPS foam after 60 days. As shown in Figure 3, the increase in processing aid concentration generally lowers the density of the foam, which causes an increase in thermal conductivity (k value).

Figure 4 illustrates the effect that increasing concentrations (0 to 4.0% by weight) of fatty acid ester processing aid has on the density and k-value of XPS foam after 60 days. As illustrated, the fatty acid ester processing aid can effectively reduce the foam density to about 1.85 pcf with a relatively narrow k value variation range (about 0.191).

**Example 5** (blowing agent composition of samples A1 to A9 not within the scope of the claims)

XPS foam samples were prepared as described in Example 1, maintaining the 1.25 weight percent $CO_2$ blowing agent (based on the total weight of the XPS foam) and using an adipate ester as the processing aid, but varying the ratio between HFO-1234ze and HFCO-1233zd to determine the blowing agent's influene on forming properties. Table 4, below, illustrates the properties of the resulting resulting foams, including the cell size, density and k-value of the foam.

Table 4. Influences of HFO-1234ze and HFCO-1233zd at different ratios.

| Sample | HFO-1234ze (%) | HFO-1233zd (%) | % Dena 109 | Cell size (mm) | Density (pcf) | k value at 60 days |
|---|---|---|---|---|---|---|
| A1 | 5.04 | 0.27 | 1.00 | 0.18 | 1.95 | 0.196 |
| A2 | 5.04 | 0.27 | 3.00 | 0.19 | 1.95 | 0.192 |
| A3 | 4.78 | 0.53 | 1.00 | 0.18 | 1.95 | 0.191 |
| A4 | 4.78 | 0.53 | 3.00 | 0.20 | 1.89 | 0.192 |
| A5 | 5.04 | 0.27 | 2.00 | 0.19 | 1.91 | 0.191 |
| A6 | 4.91 | 0.40 | 1.00 | 0.18 | 1.99 | 0.191 |
| A7 | 4.78 | 0.53 | 2.00 | 0.19 | 1.91 | 0.192 |
| A8 | 4.91 | 0.40 | 3.00 | 0.20 | 1.85 | 0.193 |
| A9 | 4.91 | 0.40 | 2.00 | 0.19 | 1.92 | 0.191 |

As illustrated above, the cell size and foam density depends more on the amount of ester processing aid than it does on the ratio of HFO-1234ze and HFO-1233zd. Increasing the amount of ester processing aid, in the range evaluated, generally increased the cell size and decreased the foam density.

In some exemplary embodiments, HFO-1234ze may be applied with other co-blowing agents, such as HFC-152a. As illustrated below in Table 5, the higher the concentration of HFC-152a, the lower density foam that is produced.

Table 5. HFO-1234ze XPS foams with HFC-152a as the only co-blowing agent.

| Sample | HFO-1234ze (%) | HFC-152a (%) | Cell size (mm) | Density (pcf) | k value at 60 days |
|---|---|---|---|---|---|
| e2-1 | 4.00 | 4.00 | 0.20 | 1.98 | 0.191 |
| f1 | 4.68 | 3.12 | 0.20 | 2.03 | 0.186 |
| f2 | 5.46 | 2.34 | 0.19 | 2.01 | 0.186 |
| f3 | 6.24 | 1.56 | 0.16 | 2.19 | 0.182 |

## Claims

**1.** A foamable polystyrene mixture comprising:

a polymer composition comprising polystyrene;
a blowing agent composition comprising carbon dioxide, HFO-1234ze, and HFC-152a;
from 0.05 to 10 wt.%, based upon the total weight of the foamable polystyrene mixture, of at least one non-VOC processing aid comprising one or more of fatty acids, ethylene oxide/propylene oxide block copolymer, styrene-methyl methacrylate copolymer, and a dispersion of organic salt of a fatty acid in ethylene vinyl acetate copolymer; and
from 0.005 to 5 wt.% of an infrared attenuating agent, based upon the total weight of the foamable polystyrene mixture.

**2.** The foamable polystyrene mixture of claim 1, wherein said blowing agent composition includes an HFO-1234ze/HFC-152a ratio of 99/1 to 1/99.

**3.** The foamable polystyrene mixture of claim 1, wherein said blowing agent composition is present in said foamable polystyrene mixture in an amount from 2.0 to 12.0 % by weight.

**4.** The foamable polystyrene mixture of claim 1, wherein said non-VOC processing aid is free of ether, acetone, alcohol, and hydrocarbons.

**5.** The foamable polystyrene mixture of claim 1, wherein said processing aid is microencapsulated.

**6.** The foamable polystyrene mixture of claim 1, further including one or more of fire retardant; plasticizing agent; pigment; elastomer; extrusion aid; antioxidant: filler; antistatic agent; biocide; termite-ocide; colorants; oils; waxes; flame retardant synergists; and/or UV absorber.

**7.** An extruded polymeric foam formed from
a foamable polystyrene material, said material comprising:

a polymer composition comprising polystyrene;
a blowing agent composition comprising carbon dioxide, HFO-1234ze, and at least one hydrofluorocarbon comprising HFC-152a;
from 0.05 to 10 wt.% based upon the total weight of the foamable polystyrene mixture, of at least one non-VOC processing aid comprising one or more of fatty acids, ethylene oxide/propylene oxide block copolymer, styrene-methyl methacrylate copolymer, and a dispersion of organic salt of a fatty acid in ethylene vinyl acetate copolymer; and
from 0.005 to 5 wt.% of an infrared attenuating agent, based upon the total weight of the foamable polystyrene material.

**8.** The extruded polymeric foam of claim 7, wherein said blowing agent composition includes an HFO-1234ze/HFC-152a ratio of 99/1 to 1/99.

**9.** The extruded polymeric foam of claim 7, wherein said polymeric foam has a density of less than 160.2 kg/$m^3$ (10 pcf).

**10.** The extruded polymeric foam of claim 7, wherein said polymeric foam has a density of no greater than 80.1 kg/$m^3$

(5 pcf).

## Patentansprüche

1. Schäumbare Polystyrol-Mischung, umfassend:

   eine Polymerzusammensetzung, die Polystyrol enthält;
   eine Treibmittelzusammensetzung, die Kohlendioxid, HFO-1234ze und HFC-152a umfasst;
   0,05 bis 10 Gew.-%, bezogen auf das Gesamtgewicht der schäumbaren Polystyrol-Mischung, mindestens eines nicht-VOC Verarbeitungshilfsmittels, umfassend eine oder mehrere Fettsäuren, Ethylenoxid/Propylenoxid-Blockcopolymer, Styrol-Methylmethacrylat-Copolymer und eine Dispersion eines organischen Salzes einer Fettsäure in EthylenVinylacetat-Copolymer; und
   0,005 bis 5 Gew.-% eines infrarotabschwächenden Mittels, bezogen auf das Gesamtgewicht der schäumbaren Polystyrol-Mischung.

2. Schäumbare Polystyrol-Mischung nach Anspruch 1, wobei die Treibmittelzusammensetzung ein HFO-1234ze/HFC-152a-Verhältnis von 99/1 bis 1/99 aufweist.

3. Schäumbare Polystyrol-Mischung nach Anspruch 1, wobei die Treibmittelzusammensetzung in der schäumbaren Polystyrol-Mischung in einer Menge von 2,0 bis 12,0 Gew.-% vorhanden ist.

4. Schäumbare Polystyrol-Mischung nach Anspruch 1, wobei das nicht-VOC Verarbeitungshilfsmittel frei von Ether, Aceton, Alkohol und Kohlenwasserstoffen ist.

5. Schäumbare Polystyrol-Mischung nach Anspruch 1, wobei das Verarbeitungshilfsmittel mikroverkapselt ist.

6. Schäumbare Polystyrol-Mischung nach Anspruch 1, die außerdem ein oder mehrere der folgenden Stoffe enthält: Flammschutzmittel, Weichmacher, Pigmente, Elastomere, Extrusionshilfsmittel, Antioxidationsmittel, Füllstoffe, Antistatika, Biozide, Termitenbekämpfungsmittel, Farbstoffe, Öle, Wachse, Flammschutzsynergisten und/oder UV-Absorber.

7. Extrudierter Polymerschaum, gebildet aus
   einem schäumbaren Polystyrol-Material, wobei das Material umfasst:

   eine Polymerzusammensetzung, die Polystyrol umfasst;
   eine Treibmittelzusammensetzung, umfassend Kohlendioxid, HFO-1234ze und mindestens einen Fluorkohlenwasserstoff, umfassend HFC-152a;
   0,05 bis 10 Gew.-%, bezogen auf das Gesamtgewicht der schäumbaren Polystyrol-Mischung, mindestens eines nicht-VOC Verarbeitungshilfsmittels, umfassend eine oder mehrere Fettsäuren, Ethylenoxid/Propylenoxid-Blockcopolymer, Styrol-Methylmethacrylat-Copolymer und eine Dispersion eines organischen Salzes einer Fettsäure in EthylenVinylacetat-Copolymer; und
   0,005 bis 5 Gew.-% eines Infrarotabschwächungsmittels, bezogen auf das Gesamtgewicht des schäumbaren Polystyrol-Materials.

8. Extrudierter Polymerschaum nach Anspruch 7, wobei die Treibmittelzusammensetzung ein HFO-1234ze/HFC-152a-Verhältnis von 99/1 bis 1/99 aufweist.

9. Extrudierter Polymerschaum nach Anspruch 7, wobei der Polymerschaum eine Dichte von weniger als 160,2 kg/$m^3$ (10 pcf) aufweist.

10. Extrudierter Polymerschaum nach Anspruch 7, wobei der Polymerschaum eine Dichte von nicht mehr als 80,1 kg/m3 (5 pcf) aufweist.

## Revendications

1. Mélange de polystyrène expansible comprenant :

une composition de polymère comprenant du polystyrène ;
une composition d'agent d'expansion comprenant du dioxyde de carbone, HFO-1234ze, et HFC-152a;
de 0,05 to 10% en masse, par rapport à la masse totale du mélange de polystyrène expansible, d'au moins un auxiliaire de fabrication non-COV comprenant un ou plusieurs de : acides gras, copolymère bloc oxyde d'éthylène/oxyde de propylène, copolymère styrène-méthacrylate de méthyle, et une dispersion de sel organique d'acide gras dans un copolymère d'éthylène-acétate de vinyle ; et
de 0,005 to 5% en masse d'un agent d'atténuation de l'infrarouge, par rapport à la masse totale du mélange de polystyrène expansible.

**2.** Mélange de polystyrène expansible selon la revendication 1, où ladite composition d'agent d'expansion inclut un rapport HFO-1234ze/HFC-152a de 99/1 à 1/99.

**3.** Mélange de polystyrène expansible selon la revendication 1, où ladite composition d'agent d'expansion est présente dans ledit mélange de polystyrène expansible en une quantité de 2,0 to 12,0% en masse.

**4.** Mélange de polystyrène expansible selon la revendication 1, où ledit auxiliaire de fabrication non-COV est exempt d'éther, d'acétone, d'alcool et d'hydrocarbures.

**5.** Mélange de polystyrène expansible selon la revendication 1, où ledit auxiliaire de fabrication est microencapsulé.

**6.** Mélange de polystyrène expansible selon la revendication 1, comprenant en outre un ou plusieurs de : agent ignifuge, agent plastifiant, pigment, élastomère, auxiliaire d'extrusion, antioxydant, charge, agent antistatique, biocide, termiticide, colorant, huile, cire, agent de synergie d'agent ignifuge et/ou absorbeur UV.

**7.** Mousse polymérique extrudée formée à partir de
un matériau en polystyrène expansible, ledit matériau comprenant :

une composition de polymère comprenant du polystyrène ;
une composition d'agent d'expansion comprenant du dioxyde de carbone, HFO-1234ze, et au moins un hydrofluorocarbone comprenant HFC-152a ;
de 0,05 to 10% en masse, par rapport à la masse totale du mélange de polystyrène expansible, d'au moins un auxiliaire de fabrication non-COV comprenant un ou plusieurs de : acides gras, copolymère bloc oxyde d'éthylène/oxyde de propylène, copolymère styrène-méthacrylate de méthyle, et une dispersion de sel organique d'acide gras dans un copolymère d'éthylène-acétate de vinyle ; et
de 0,005 to 5% en masse d'un agent d'atténuation de l'infrarouge, par rapport à la masse totale du matériau en polystyrène expansible.

**8.** Mousse polymérique extrudée selon la revendication 7, dans laquelle ladite composition d'agent d'expansion inclut un rapport HFO-1234ze/HFC-152a de 99/1 à 1/99.

**9.** Mousse polymérique extrudée selon la revendication 7, dans laquelle ladite mousse polymérique a une densité inférieure à 160,2 kg/$m^3$ (10 pcf).

**10.** Mousse polymérique extrudée selon la revendication 7, dans laquelle ladite mousse polymérique a une densité de pas plus de 80,1 kg/$m^3$ (5 pcf).

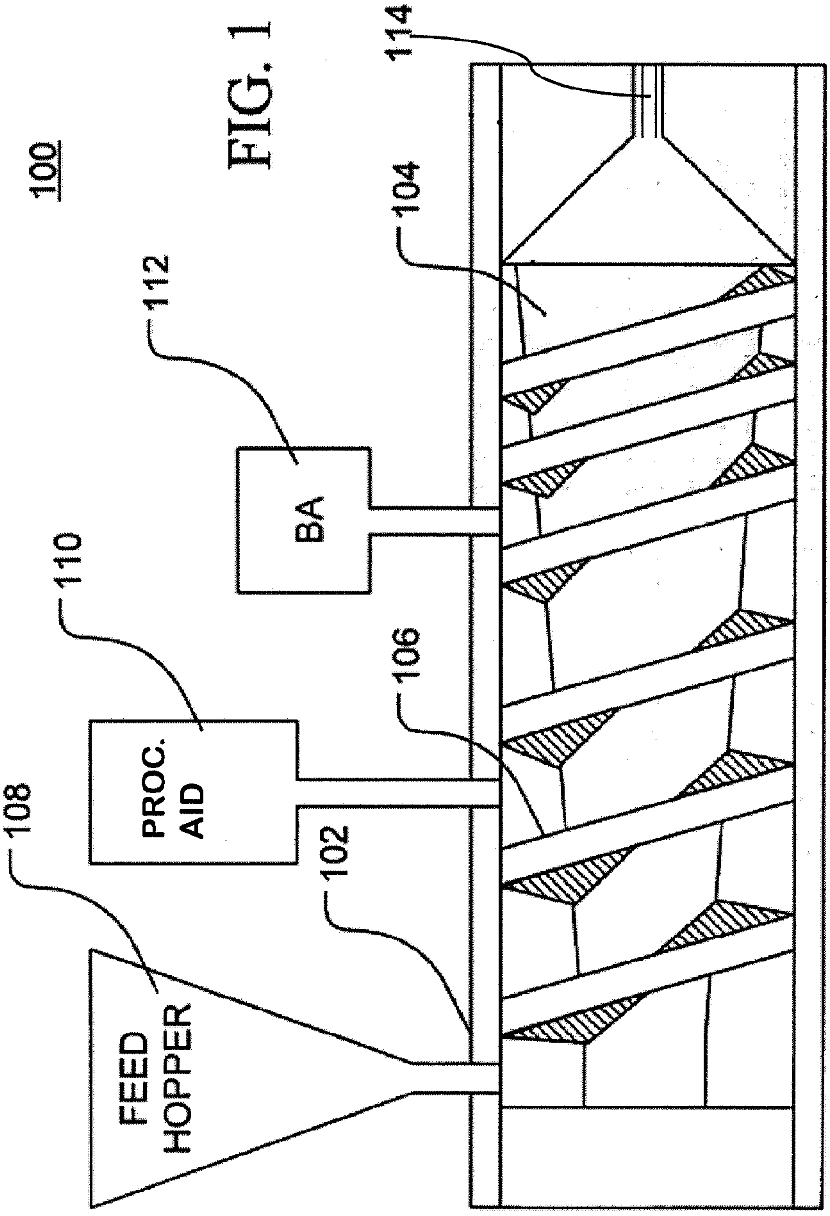


FIG. 1

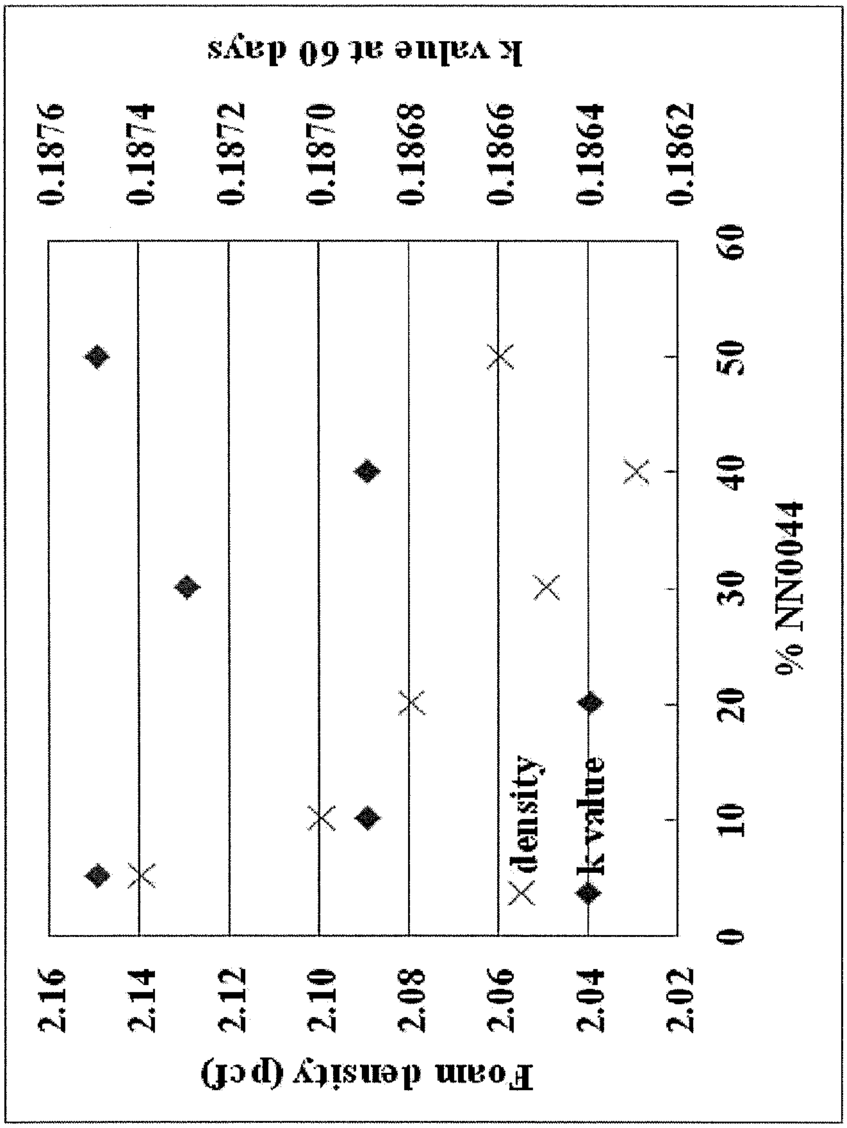
Foam density (pcf)
2.16
2.14
2.12
2.10
2.08
2.06
2.04
2.02
k value at 60 days
0.1876
0.1874
0.1872
0.1870
0.1868
0.1866
0.1864
0.1862
0
10
20
30
40
50
60
% NN0044
density
k value

FIG. 2

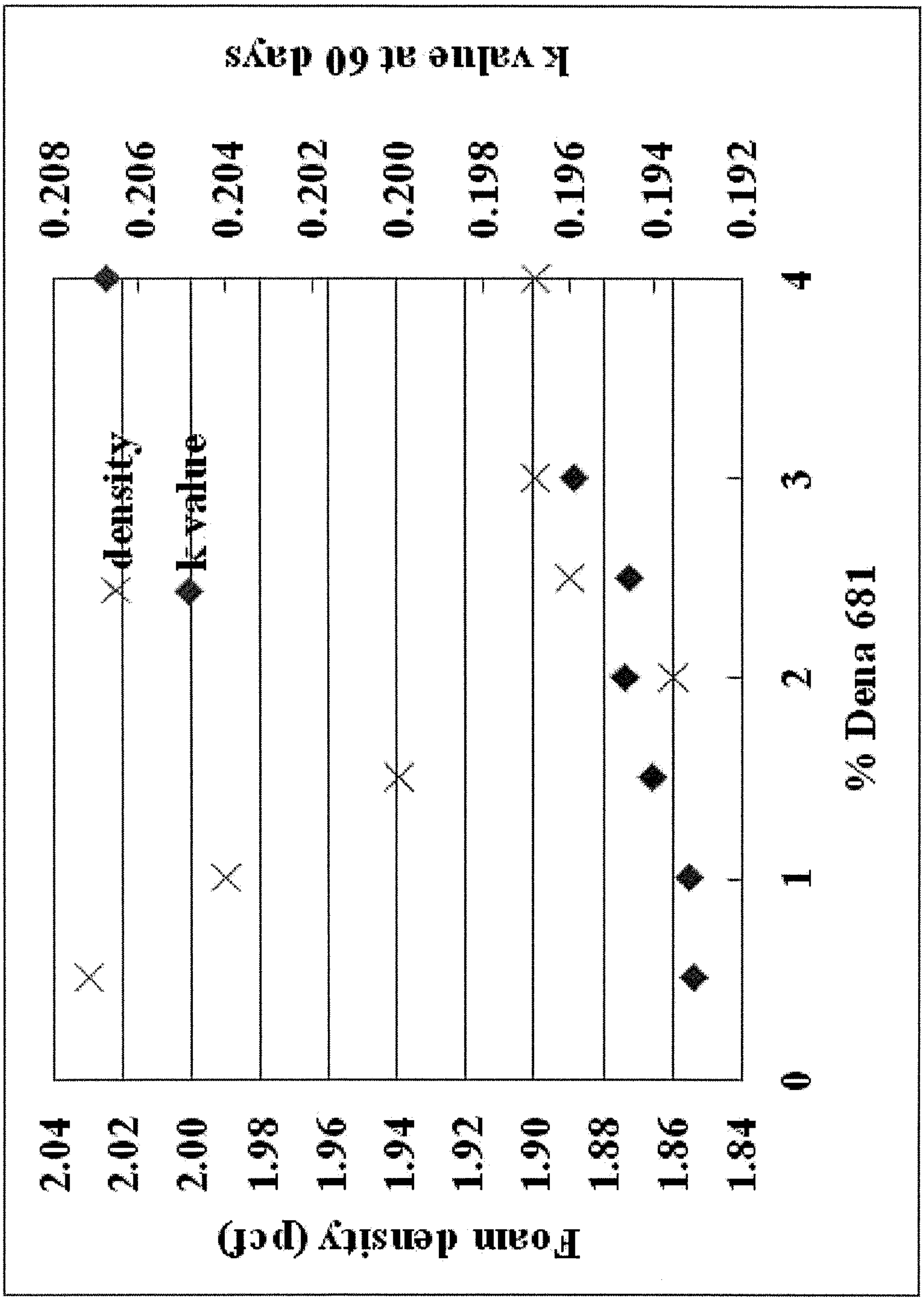
Foam density (pcf)
2.04
2.02
2.00
1.98
1.96
1.94
1.92
1.90
1.88
1.86
1.84
k value at 60 days
0.208
0.206
0.204
0.202
0.200
0.198
0.196
0.194
0.192
density
k value
0
1
2
3
4
% Dena 681

FIG. 3

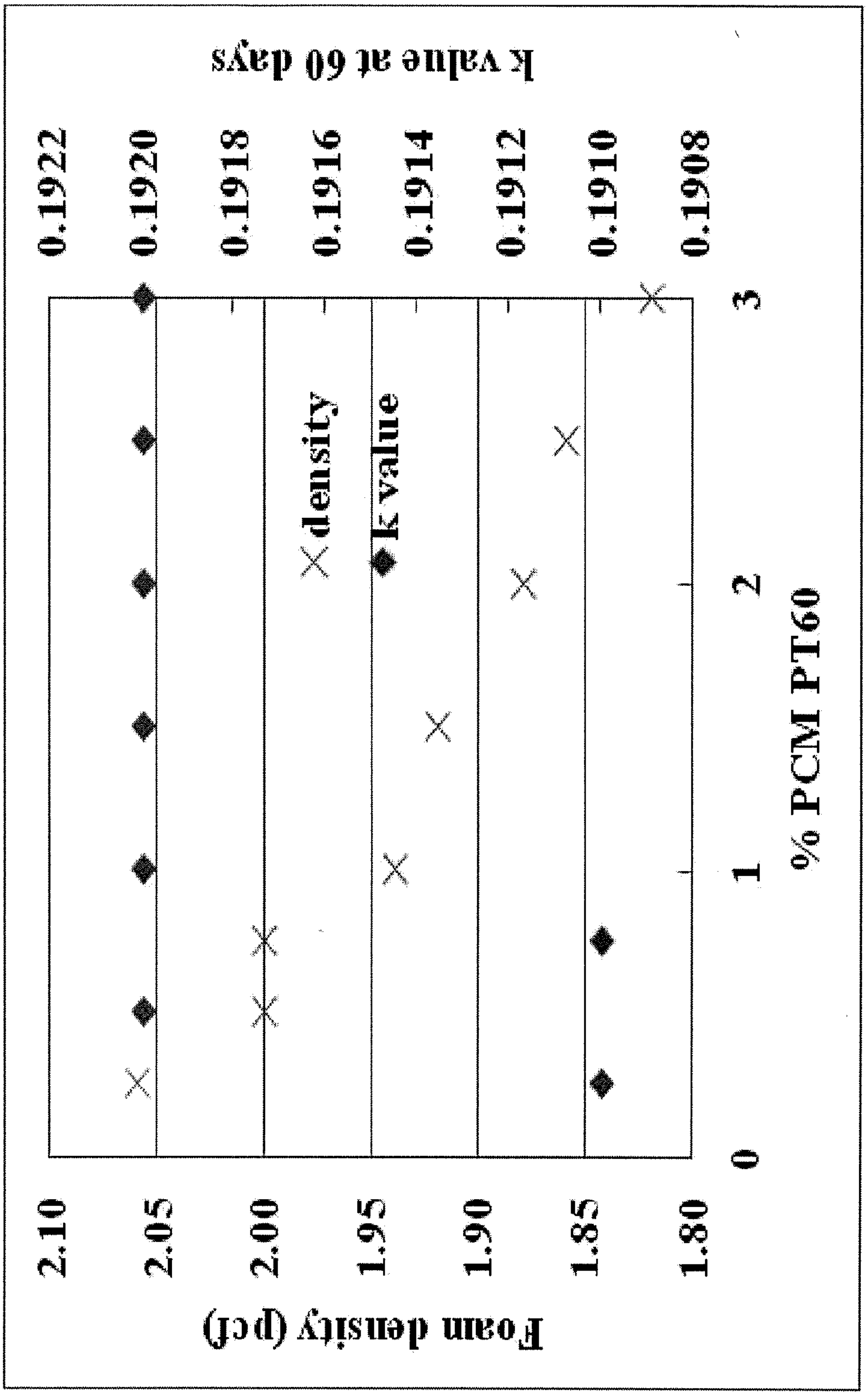

Foam density (pcf)
2.10
2.05
2.00
1.95
1.90
1.85
1.80
k value at 60 days
0.1922
0.1920
0.1918
0.1916
0.1914
0.1912
0.1910
0.1908
0
1
2
3
% PCM PT60
density
k value


FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007173554 A
- US 2007144221 A1